# EUROPEAN PATENT APPLICATION

(11) **EP 1 699 168 A1**
(43) Date of publication of application: **06.09.2006**
(21) Application number: 06003995.5
(22) Date of filing: 27.02.2006
(51) Int. Cl.: H04L 12/18, H04L 29/06, H04N 7/24

(54) **System and method of broadcasting full-screen video**

(30) Priority: 01.03.2005 CN 200510052962
(71) Applicant: ASUSTeK Computer Inc., Peitou Taipei (TW)
(72) Inventor: Juang, Ya-Shu, Taipei (TW); Lai, Yu-Hsuan, Taipei (TW)
(74) Representative: Weber, Joachim

(57) **Abstract**

A system and a method of broadcasting a full-screen video on a network. The system includes a server computer system and a client computer system. The server computer system is connected to the client computer system via the network and executes an application program in a full-screen mode. The server computer system captures full-screen video image data, generates a video bitstream, and outputs the video bitstream via the network. The client computer system receives the video bitstream via the network, reconstructs the video bitstream into the image data, and displays image frames according to the image data.

## Description

This application claims the benefit of People's Republic of China application Serial No. 200510052962.2, filed March 1, 2005, the subject matter of which is incorporated herein by reference.

### BACKGROUND OF THE INVENTION

### Field of the Invention

The invention relates in general to a broadcasting method and a broadcasting system, and more particularly to a system and method of broadcasting a full-screen video on a network.

### Description of the Related Art

Nowadays the market is glutted with the computer games and a lot of computer game competitions are frequently contested. Because of these contest, there is a need for broadcasting. By broadcasting, the absent computer players can watch the live games and learn the skills of others to enhance the skill themselves by the broadcast.

According to the present technique, audiences are normally utilized the live television broadcasting method and a real-time network broadcasting method to watch the live competitions. However, the live television broadcasting method has the limitations in the viewing angle and the timing.
In the limitation of the viewing angle, even though the television station plays the program in a live broadcasting manner, the viewing angle of the program is decided by the on-site director. In addition, the advertisements are sometimes inserted into the program playing procedure. Thus, it is possible to miss the wonderful game procedure. The timing limitation makes the audience feel inconvenient because he or she can only watch the procedure of the game in the program, which is recorded and broadcasted in the midnight by the television station. The real-time network broadcasting method deteriorates the image quality because the frames are converted several times. In addition, the complicated conversion processes increase the cost of constructing the network broadcasting station.

In addition, another non-real time watching method is to download the game film from the network. Although this method can let the audience decide the time and place to watch the game, the audience cannot enjoy the fun of real time watching. In addition, the downloaded film usually has to be executed by the corresponding playing software or the executing program of the game itself. Consequently, the user has to search for and install the software or program in order to watch the game, and it is very inconvenient because the user cannot watch the game when no executing program or playing software is installed. Thus, the above-mentioned broadcasting methods cannot provide a convenient and real-time way to let the user watch the computer game competition.

### SUMMARY OF THE INVENTION

It is therefore an object of the invention to provide a method of broadcasting a full-screen video on a network such that a dynamic full-screen video, such as a live computer game, displayed on a server computer may be watched in real time and in a simpler and more convenient manner.

The invention achieves the above-identified object by providing a method of broadcasting a dynamic full-screen video on a network. The method includes the steps of: providing the dynamic full-screen video; capturing image data corresponding to the dynamic full-screen video; converting the image data into a video bitstream and outputting the video bitstream to the network; and receiving the video bitstream from the network, reconstructing the video bitstream into the image data, and displaying an image frame corresponding to the image data according to the image data.

The invention also achieves the above-identified object by providing a network broadcasting system, which includes a network, a server computer system and a client computer system. The server computer system executes an application program in a full-screen mode, captures image data corresponding to a dynamic full-screen video in real time when the application program is executed, constructs the image data into a video bitstream, and outputs the video bitstream through the network. The client computer system communicates with the server computer system through the network, receives the video bitstream through the network, reconstructs the video bitstream into the image data, and then displays an image frame corresponding to the image data according to the image data.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a schematic illustration showing a computer network system.

FIG. 2 is a flow chart showing a method of broadcasting a full-screen video on a network according to a preferred embodiment of the invention.

FIG. 3 is a detailed flow chart showing one step of this embodiment.

FIG. 4 is a detailed flow chart showing the other step of this embodiment.

### DETAILED DESCRIPTION OF THE INVENTION

The invention normally provides a method of broadcasting a full-screen video on a network such that the dynamic full-screen video displayed in a remote computer may be watched in a simple and convenient manner.

A computer network system includes a server computer system inter-connected to the network and a client computer system when the network broadcast is processing. The invention captures the image data correspond to the dynamic full screen picture and constructs the image data to video bitstream, and then outputs it to the client computer system by the network when the server computer system executes an application program in full screen. Thus, the client computer system can receive the video bitstream through the network in real time and reconstruct the video bitstream into the image data, and then displays an image frame corresponding to the image data according to the image data.

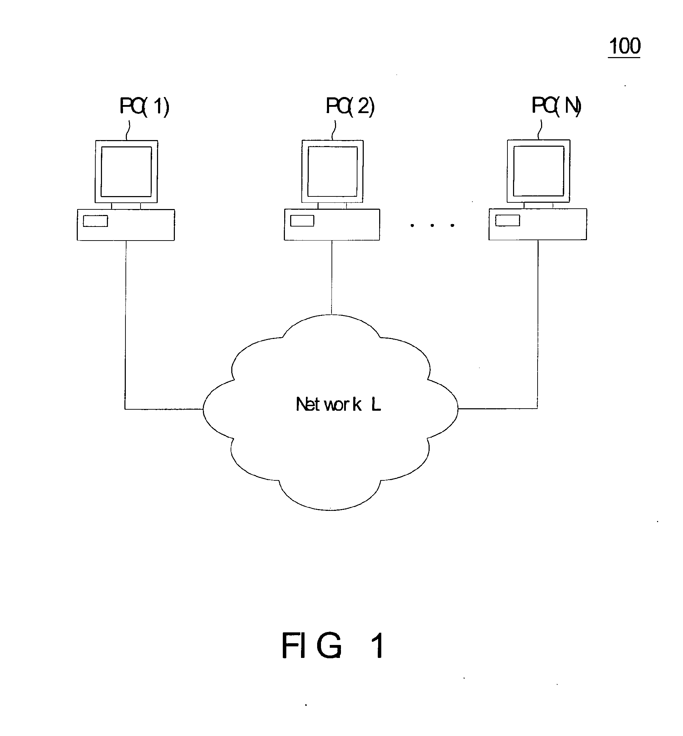

FIG. 1 is a schematic illustration showing a computer network system. Referring to FIG. 1, the computer network system 100 includes a network L and multiple computer systems PC(1) to PC(N), wherein N is a positive integer. The computer system PC is, for example, a desktop computer, a notebook computer or a barebone system. The type of the computer system PC is not particularly restricted in this embodiment. The network L is, for example, a local area network, a wide area network, a wireless network or an Internet. The type of the network L is not particularly restricted in the above-mentioned types. The computer systems PC(1) to PC(N) are coupled to one another through the network L such that the signal can be transmitted therebetween.

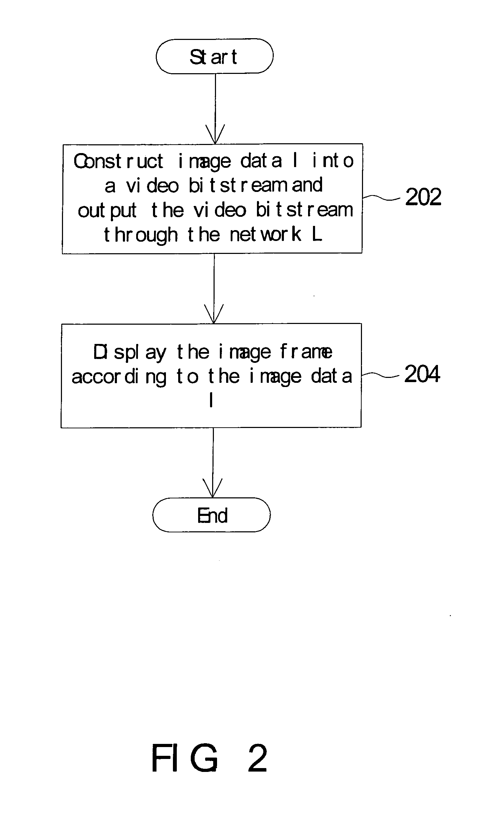

FIG. 2 is a flow chart showing a method of broadcasting a full-screen video on a network according to a preferred embodiment of the invention. As shown in FIG. 2, the method of broadcasting a full-screen video on a network is used in, for example, the above-mentioned computer network system 100. For example, the first computer system PC(1) is a server computer system, and the computer systems PC(2) to PC(N) are client computer systems. Only the second computer system PC(2) is used as an example to make the description. The method of broadcasting the full-screen video on the network includes the following steps. First, in step 202, the first computer system PC(1) constructs image data I into a video bitstream, and then outputs the video bitstream through the network L. In step 202, the image data I is the data corresponding to the dynamic full-screen video when the first computer system PC(1) is executing the application program. The application program is, for example, a computer game or a DVD playing program. Next, in step 204, the second computer system PC(2) receives the video bitstream through the network L in real time and reconstructs the video bitstream into the image data I. In addition, the second computer system PC(2) displays an image frame corresponding to the image data I according to the image data I.

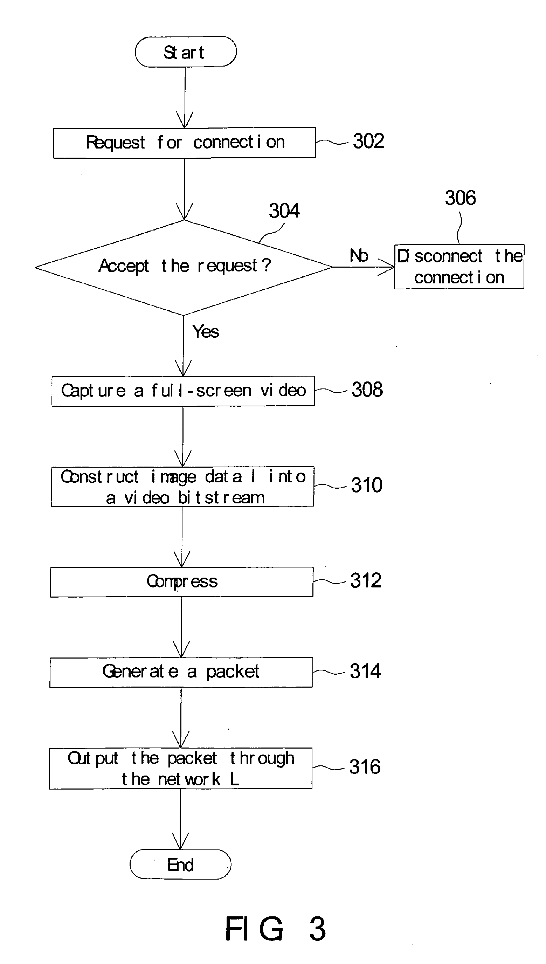

FIG. 3 is a detailed flow chart showing a step 202 of this embodiment. That is, FIG. 3 shows the detailed flow chart when the first computer system PC(1) constructs the image data I into the video bitstream and outputs the video bitstream through the network L. When the first computer system PC(1) executes the computer game in a full-screen mode and the second computer system PC(2) is for watching the game frames of the first computer system PC(1) through the Internet L in real time, the second computer system PC(2) firstly outputs a connection request to the first computer system PC(1), as shown in step 302. That is, the first computer system PC(1) receives the request for connection. Next, in step 304, the first computer system PC(1) decides whether to accept the connection request or not. If the first computer system PC(1) refuses the connection request, step 306 is performed to disconnect the second computer system PC(2); or otherwise the first computer system PC(1) sequentially performs the steps 308 to 316.

First, the first computer system PC(1) captures the image data I corresponding to the full-screen video in step 308, and then constructs the image data I into the video bitstream in step 310. Thereafter, the first computer system PC(1) compresses the video bitstream in step 312, and then generates a packet according to the compressed video bitstream in step 314. Finally, the packet is outputted through the network L in step 316. This embodiment has no restriction on the type of the application program and the method of capturing the images as long as the computer system PC can capture the images of the dynamic full-screen video when the computer system PC is executing the application program in a full-screen mode.

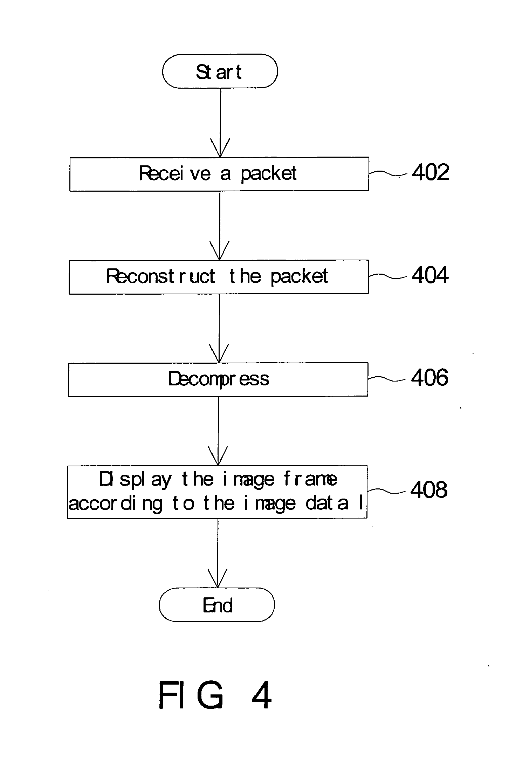

FIG. 4 is a detailed flow chart showing the step 204 of this embodiment. That is, FIG. 4 shows the detailed flow chart when the second computer system PC(2) receives the video bitstream through the network L in real time, and reconstructs the video bitstream into the image data I. After the first computer system PC(1) starts to output the packet, the second computer system PC(1) sequentially performs the steps 402 to 408. The second computer system PC(2) starts to receive the packet in step 402, and then reconstructs the packet into a compression video bitstream in step 404. In step 406, the compressed video bitstream is decompressed into the image data I. Finally, in step 408, the image frame corresponding to the image data I is displayed so that the first computer system PC(1) represents the frames of the ongoing game in real time.

Consequently, the frames of the game of the first computer system PC(1) may be displayed on the second computer system PC(2) in real time. That is, the user, who is not beside the first computer system PC(1) but beside the second computer system PC(2), can watch the dynamic full-screen video of the ongoing game in the first computer system PC(1).

In addition, the image frame has corresponding image parameters such as a resolution and a frame update rate. The second computer system PC(2) may transfer a control command to the first computer system PC(1) at displaying the image frame corresponding to the image data I. By doing so, the first computer system PC(1) is available for adjusting the image parameters of the captured image data I. Alternatively, the first computer system PC(1) can adjust the image parameters of the captured image data I according to the connection speed, such that the second computer system PC(2) can display the image frames in a smooth manner.

The computer network system and the method of broadcasting the full-screen video on the network according to the embodiments of the invention enable the users, who are beside the computer systems on the network, to watch the dynamic full-screen video of the server computer system on their own computer systems through the network. Thus, the game players can watch the ongoing computer game of the server computer system in real time. In addition, the players participating in the games may also make the ongoing game open to the other players on the network so that the communion therebetween is more convenient. Consequently, the dynamic full-screen video is shared in real time through the computer systems connected to the network according to this invention.

While the invention has been described by way of examples and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A method of broadcasting a dynamic full-screen video on a network, comprising the steps of:
(a) providing the dynamic full-screen video;
(b) capturing image data corresponding to the dynamic full-screen video;
(c) converting the image data into a video bitstream and outputting the video bitstream to the network; and
(d) receiving the video bitstream from the network, reconstructing the video bitstream into the image data, and displaying an image frame corresponding to the image data according to the image data.

2. The method according to claim 1 being used in a computer network system, which has a server computer system and a client computer system connected to the server computer system through the network.

3. The method according to claim 2, wherein the steps (a), (b) and (c) are executed by the server computer system.

4. The method according to claim 2, wherein the step (d) is executed by the client computer system.

5. A method of broadcasting a dynamic full-screen video being used in a computer network system, which has a network, a server computer system and a client computer system, the server computer system executing an application program in a full-screen mode and communicating with the client computer system through the network, the method comprising the steps of:
utilizing the server computer system to construct image data into a video bitstream and outputting the video bitstream through the network, wherein the image data corresponds to the dynamic full-screen video when the application program is executed in a full-screen mode;
utilizing the client computer system to receive the video bitstream through the network in real time, and reconstructing the video bitstream into the image data; and
utilizing the client computer system to display an image frame corresponding to the image data according to the image data.

6. A network broadcasting system, comprising:
a network;
a server computer system for executing an application program in a full-screen mode, capturing image data corresponding to a dynamic full-screen video in real time when the application program is executed, constructing the image data into a video bitstream, and outputting the video bitstream through the network; and
a client computer system for communicating with the server computer system through the network, receiving the video bitstream through the network, reconstructing the video bitstream into the image data, and then displaying an image frame corresponding to the image data according to the image data.

7. The method according to claim 5 or 6, wherein a resolution and a frame update rate of the image frame are controlled by the client computer system.

8. The method according to claim 5 or 6, wherein a resolution and a frame update rate of the image frame are controlled by the server computer system.

9. The method according to claim 5, wherein the step of outputting the video bitstream comprises:
compressing the video bitstream into a compressed video bitstream, and outputting the compressed video bitstream through the network.

10. The method according to claim 9, wherein the step of receiving the video bitstream comprises:
decompressing the compressed video bitstream into the video bitstream and reconstructing the video bitstream into the image data.
